Europäisches Patentamt

European Patent Office

Office européen des brevets

(19)

(11) Publication number: **0 109 938**
**B1**

(12) # EUROPEAN PATENT SPECIFICATION

(45) Date of publication of patent specification: **19.08.87**

(51) Int. Cl.⁴: **G 03 B 21/64, G 03 D 15/10**

(21) Application number: **83830207.3**

(22) Date of filing: **24.10.83**

(54) **A slide mount and a method and apparatus for fitting a transparency in this mount.**

(30) Priority: **25.10.82 IT 6824082**

(43) Date of publication of application:
**30.05.84 Bulletin 84/22**

(45) Publication of the grant of the patent:
**19.08.87 Bulletin 87/34**

(84) Designated Contracting States:
**AT BE CH DE FR GB LI LU NL SE**

(56) References cited:
**EP-A-0 047 424
CH-A- 286 529
CH-A- 376 242
DE-A-1 622 988
DE-A-2 158 140
FR-A-1 230 528
FR-A-1 350 778
FR-A-1 454 056
GB-A-1 365 434
US-A-4 104 818**

(73) Proprietor: **Ferrero, Franco
Via 1 Maggio 74/48
I-10098 Rivoli (Torino) (IT)**
(73) Proprietor: **Polato, Emanuele
Corso Francia 214
I-10096 Leumann (Torino) (IT)**

(72) Inventor: **Ferrero, Franco
Via 1 Maggio 74/48
I-10098 Rivoli (Torino) (IT)**
Inventor: **Polato, Emanuele
Corso Francia 214
I-10096 Leumann (Torino) (IT)**

(74) Representative: **Buzzi, Franco et al
c/o Jacobacci-Casetta & Perani S.p.A. Via Alfieri,
17
I-10121 Torino (IT)**

Courier Press, Leamington Spa, England.

## Description

The present invention relates to slide mounts of the type comprising a pair of coupled quadrilateral frames having peripheral support surfaces on their inner faces for a transparency inserted in the mount.

In slide mounts of this type, there is a problem in inserting and positioning the transparency correctly during assembly of the slide. Clearly, this operation must be carried out before the coupling of the two frames of the mount by applying the transparency to the peripheral support surface of one of the frames and then completing the mount by joining the two frames. This operation is extremely delicate, particularly in the case of assembly of the slide by automatic mounting devices, since the transparency must be perfectly centred relative to the window of the frame that receives it, and it must be able to maintain this position securely until the moment of joining with the other frame.

In order to solve this problem, it has been proposed to apply a glue to the peripheral support surface of the frame intended to receive the transparency. This solution, although allowing on the one hand the secure positioning of the transparency, on the other hand involves the need to provide a tool for depositing glue on the frame of the mount and this operation obviously increases the production time. Moreover, the glue may streak and soil the transparency, and resist the proper expansion of the transparency in use under the heat from the projector bulb, with the risk that the projected image may be out of focus.

A further serious disadvantage of this solution lies in the fact that the frame is difficult to re-use with a different transparency, since it is difficult and uneconomic to remove the one fitted originally and, in any case, may result in a risk of deformation or even breakage of the frames of the mount.

In order to avoid the disadvantages mentioned above DE—A—1 622 988 and CH—A—376 242 propose that one of the frames, that is, the one intended to receive the transparency initially during mounting, has tooth retaining members under which two opposite edges of the transparency are anchored to the support surface of this frame.

The retaining teeth are located in two series parallel to two opposite sides of the frame, and in DE—A—1 622 988 the retaining teeth of each series have active surfaces inclined towards the teeth of the other series and against which the opposite edges of the transparency bear.

The object of the present invention is to provide a slide mount of the above-mentioned type, which is sloped so as to ensure a more easy and secure positioning of the transparency in the frame that receives it by means of a pure mechanical engagement also adapted to be automatically carried out.

According to the invention, this object is achieved by virtue of the fact that, between the two series of retaining teeth and the corresponding zones of the peripheral support surface of the frame, there are formed two recessed slopes facing the inclined active surfaces of the retaining teeth and inclined downwardly towards these retaining teeth.

By virtue of this characteristic, during assembly of the slide, the transparency is more easily and correctly located relative to the frame that receives it, without the need to make use of glue, while nonetheless ensuring secure and safe retention. The absence of glue avoids any risk of damage to the transparency, while enabling easy removal which allows the possible subsequent re-use of the mount for a different transparency.

Furthermore, the shape of the mount, which allows a purely mechanical engagement of the transparency with the receiving frame, does not involve any complication in the assembly of the slide, which may be carried out either manually or fully automatically at extremely high rates. Indeed, in order to anchor the transparency to the frame that receives it, it suffices to place the transparency close to the support surface of the frame, bring together its opposite edges which are intended to engage the retaining teeth, and then release the transparency which, as a result of its resilient return to its flat undeformed condition, inserts itself beneath the retaining teeth.

Engagement of the transparency is considerably facilitated by the two downwardly-inclined recessed slopes which moreover allow the teeth to be formed with a reduced height with respect to the above-mentioned known solutions, thus reducing the global thickness of the slide mount. Furthermore, the two recessed slopes permit in use thermal expansion of the transparency, thus effectively avoiding wrinkles thereof.

Preferably, but not necessarily, at least the frame that receives the transparency during assembly of the slide has positioning stops which cooperate with the remaining two opposite edges of the transparency.

This characteristic allows the transparency to be positioned and centred with the maximum precision relative to the window of the mount.

The invention also provides a method for fitting the transparency to a mount according to the invention, and fully automatic apparatus for carrying out the method.

The method according to the invention is characterised in that it comprises the steps of cutting a transparency of a predetermined length, positioning the transparency on the peripheral support surface of one of the frames having the retaining teeth prior to the coupling of the frames, bringing the two opposite edges of the transparency together by bending the transparency so that its concavity faces the frame, and releasing the edges of the transparency to effect, by resilient return of the transparency to its undeformed flat condition, the engagement of said edges of the transparency beneath the retaining teeth of the frame.

The invention will now be described in detail with reference to the appended drawings, provided purely by way of non-limiting example, in which:

Figure 1 is a perspective view of a slide mount according to the invention;

Figure 2 is a cross-sectional view on an enlarged scale taken on the line II—II of Figure 1;

Figure 3 is a perspective view illustrating one of the two frames of the mount;

Figure 4 is a cross-sectional view on an enlarged scale taken on the line IV—IV of Figure 3;

Figure 5 is a plan view from above illustrating schematically apparatus for assembling a slide according to the invention;

Figure 6 is a partially sectioned view on the line VI—VI of Figure 5;

Figure 7 is a cross-sectional view on an enlarged scale taken on the line VII—VII of Figure 6;

Figure 8 is a perspective view from below of a part of the apparatus illustrated in Figures 5 and 6; and

Figures 9, 10 and 11 illustrate three successive stages of operation of the apparatus of Figures 5 and 6.

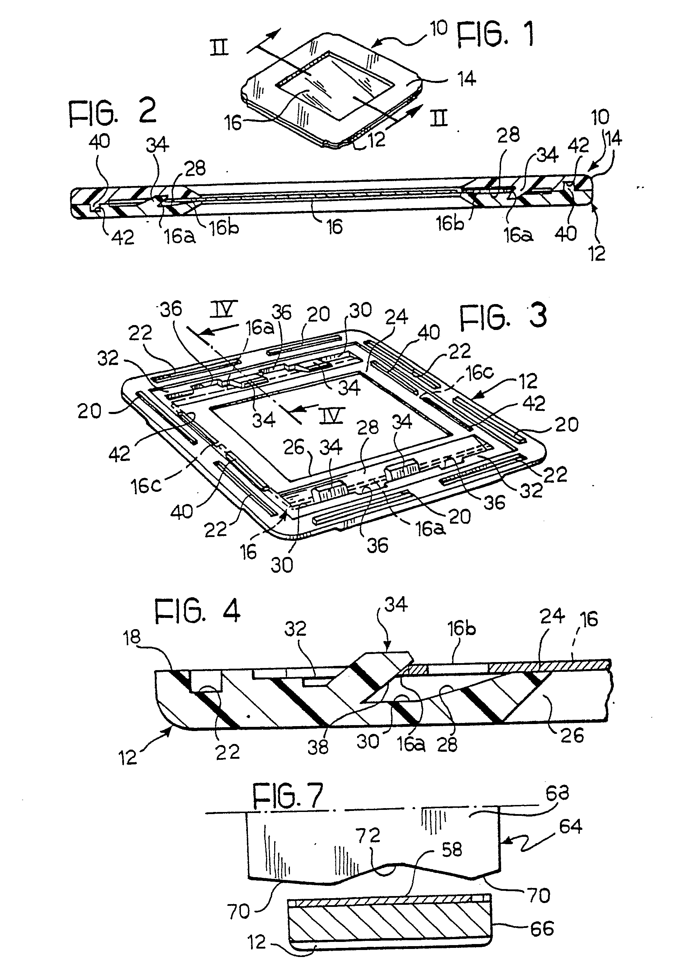

Referring initially to Figures 1 to 4, a slide mount is generally indicated 10 and includes a pair of rectangular frames 12, 14 of moulded plastics material connected together so as to be separable, and a transparency 16 inserted and retained between the two frames 12 and 14.

The two frames 12, 14 are both of moulded plastics material and have an identical configuration which is illustrated in detail in Figure 3, with reference to the frame 12. Thus the description which follows with reference to the frame 12 applies equally to the other frame 14.

The frame 12 has a peripheral rim 18 along the sides of which are formed alternating projections and recesses 20, 22 arranged to snap-engage the corresponding recesses 22 and projections 20 of the other frame 14 upon assembly of the mount 10.

The inner part of the frame 12 defines a support rim 24 which is recessed relative to the outer rim 18 and defines a rectangular window 26 through which the photograph that appears on the transparency 16 is visible when the mount 10 is assembled.

Between the larger sides of the support rim 24 and the corresponding sides of the peripheral rim 18 are formed two recessed slopes 28 which are inclined downwardly towards the outer rim 18. Each of the two slopes 28 terminates with a further rebated surface 30 which is connected to the respective side of the outer rim 18 by a surface 32 located at a level slightly lower than that of the rim 18.

In correspondence with each rebated surface 20 are formed a series of alternating projecting teeth 34 and recesses 36 of a form complementary to that of the teeth 34. In the example illustrated, there are four teeth 34 and recesses 36 in each series but it is clear that there could be a different number. Furthermore, for reasons which will become clear below, the teeth 34 and the recesses 36 of one series are staggered relative to the teeth 34 and the recesses 36 of the other series so that each tooth 34 of one series faces a recess 36 of the other series.

As illustrated in greater detail in Figure 4, each tooth 34 of each series is inclined towards the other series relative to a general plane of the frame 12, thus defining an inclined anchoring surface 38 facing the respective slope 28 and having an incline greater than that of the latter. It should be noted that the distance between the straight lines connecting the tops of the anchoring surfaces 38 of the teeth 34 of the two series is less than the width of the transparency 16 intended to be inserted in the mount 10, the width of the transparency 16 being taken as the distance between the edges 16a thereof along which the perforations 16b of the film are formed.

In the recessed zone 32 between the other two sides of the support rim 24 and the outer rim 18 are formed two series of positioning members, each series being formed by an elongate projection 40 and a recess 42 adjacent the projection 40 and having a form complementary thereto. The arrangement of these positioning members is such that the projection 40 of one series corresponds to the recess 42 of the other series, and *vice versa*. It should however be noted that, although the presence of the positioning members described above is preferred, it is not absolutely essential and the projections 40 and recesses 42 could therefore be omitted.

The arrangement of the coupling projections and recesses 20, 22, the retaining teeth and their recesses 34, 36, and the positioning projections 40 and their recesses 42 is clearly such as to allow the coupling of the frame 12 with the frame 14 in an opposing condition and, as stated above, the frame 14 is absolutely identical to the frame 12. This coupling condition, and hence the assembly of the mount 10, is illustrated in Figure 2 in which the coupling projections 20 of each frame 12, 14 are clearly seen to be a force-fit in the recesses 22 of the other frame 14, 12, while the retaining teeth 34 of each frame are housed by means of a mating fit in the recesses 36 of the other frame. Similarly, any positioning projections 40 of one frame engage the corresponding recesses 42 of the other frame. The transparency 16 inserted in the mount 10 is interposed between the support rims 24 of the two frames 12, 14 with its edges 16a anchored beneath the retaining teeth 34 of the frame 12 and firmly retained in the position by the retaining teeth 34 of the other frame 14.

The correct positioning of the transparency 16 relative to the windows 26 of the two frames 12, 14 is ensured by the presence of the projections 40 which clearly face the remaining two opposite sides 16c of the transparency 16.

It is clear from the above that the transparency 16 is held in the mount 10 without the use of glue or other permanent fixing means, which allows a number of important advantages to be obtained among which may be mentioned the following:

— ease and rapidity of both manual and mechanical assembly of the slide;

— the avoidance of any risk of streaking or soiling of the transparency;

— precise positioning and centering of the transparency;

— the allowance of the proper expansion of the transparency in use of the slide due to heating by the projector bulb, with the consequent avoidance of any risk of the projected image being out of focus as a result of undesirable bowing or wrinkling of the transparency.

One of the more important advantages is certainly that arising from the ease and rapidity of assembly of the slide, which is made possible by virtue of the above-described configuration of the frames 12 and 14 by means of which the transparency 16 may be fitted, before coupling of the two frames, in an extremely easy and practical manner.

Indeed, for manual fitting, it is necessary simply to place the transparency 16 close to the support rim 24 of one of the two frames 12, 14 and bend the transparency 16, bringing the two edges 16a closer together to engage them beneath the teeth 34 on the slopes 28. At this point, it suffices to release the transparency 16 so that it returns to an undeformed flat condition by its own resilience, whereby the edges 16a come to bear against the inclined anchoring surfaces 38 of the teeth 34. At this point, the mount 10 may be completed by the snap-engagement of the other of the two frames 12, 14 so that the transparency is correctly and firmly retained in the position illustrated in Figure 2.

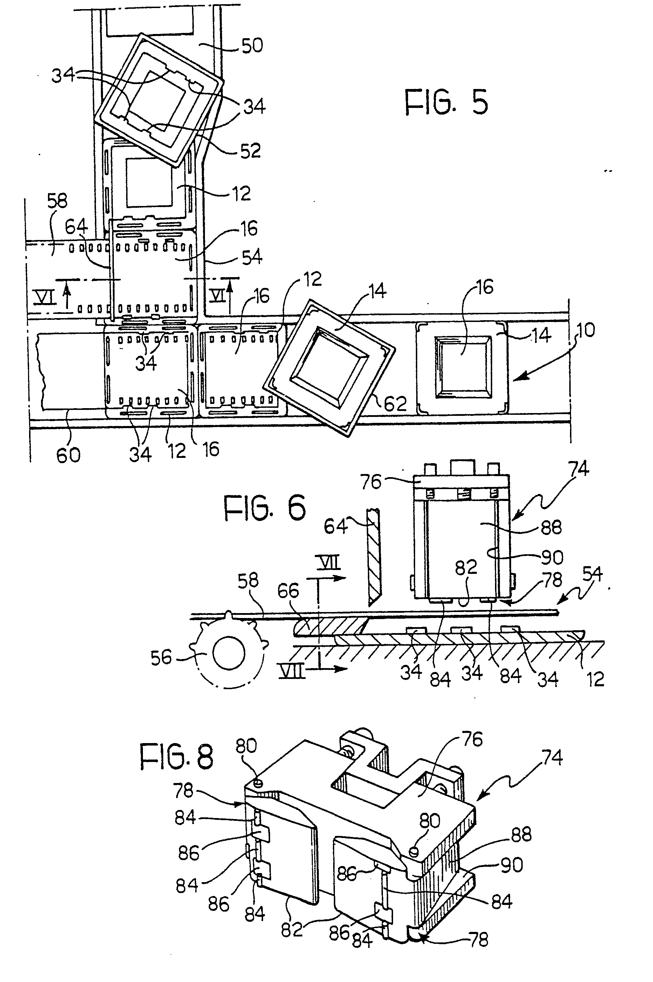

Mechanical fitting of the transparency 16 may be effected in an equally easy manner by means of mounting apparatus illustrated schematically in Figures 5 to 11. This apparatus is none other than a conventional mounter (for example, that sold commercially by the German firm Hanns Loersch under the name QUICKPOINT-DIAMOUNT 2000) modified so as to effect automatically the bending of the transparency 16 and its anchoring to the retaining teeth 34 of one of the two frames 12, 14 of the mount 10.

The conventional components of the apparatus are, briefly, a feed device 50 for feeding the frames 12 (or 14) individually from a vertical loader 52 to a cutting and mounting station, indicated schematically 54. A continuous strip of film 58 is fed to the station 54 in a direction perpendicular to the feed direction of the frames 12 by means of a drive device 56. Downstream of the station 54 is a transfer device 60 which transfers the frames 12 to a vertical loader from which the other frames 14 (or 12) are supplied for coupling to the frames 12 and subsequently joined thereto at a closure station (not shown in the drawings) by means of pressure rollers.

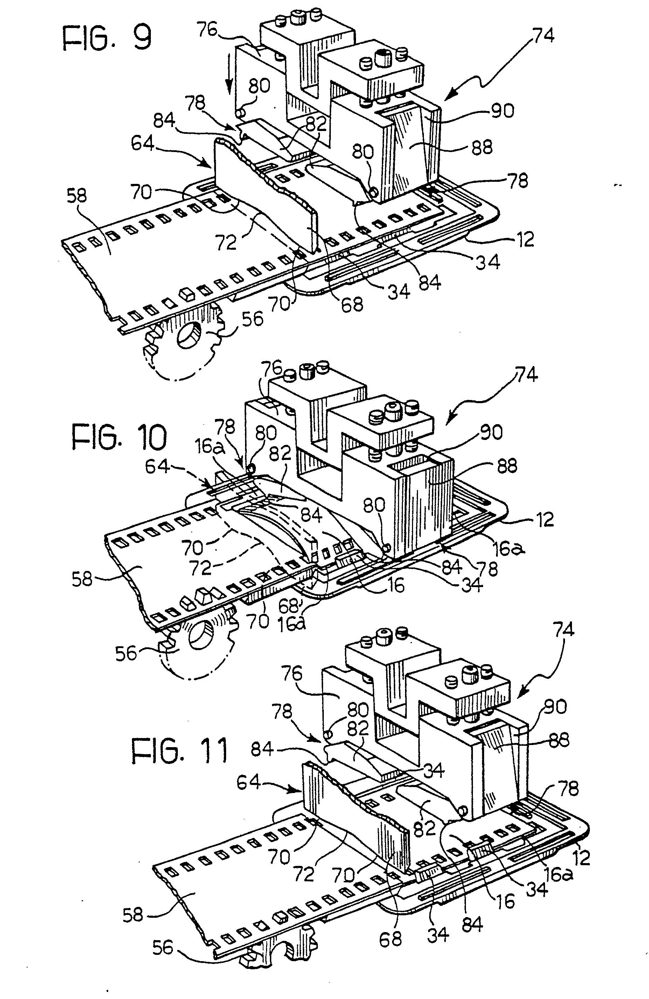

The cutting and mounting station 54 is illustrated schematically in Figures 6 and 9 to 11 and comprises a cutting blade 64 disposed transverse the film 58 and movable reciprocatingly in synchronism with the advance of the film and the frames 12 between a raised inoperative position (Figures 6, 9 and 11) and a lowered cutting position (Figure 10), and a counter-blade 66 located beneath the film 58. The blade 64 is illustrated in greater detail in Figure 7 and comprises a plate 68 connected to a drive unit of known type, not shown in the drawings, and having a lower cutting edge with two ends 70 inclined slightly upwardly and a central re-entrant arcuate part 72.

At the cutting and mounting station 54 there is also a bending member, generally indicated 74, the function of which is to bend the transparencies 16 after cutting by the blade 64 to insert them beneath the retaining teeth 34 of the frames 12. This member is movable in synchronism with the cutting blade 64 between a raised inoperative position illustrated in Figures 6, 9 and 11, in which it is spaced from the film 58 and hence from the frame 12 disposed in correspondence with the station 54, and a lowered position illustrated in broken outline in Figure 10, in which it is located in contact with the frame 12 to insert the transparency in the manner explained below.

As illustrated in greater detail in Figure 8 and in Figures 9 to 11, the bending member 74 comprises a support body 76 connected to a drive unit (not illustrated), for example a pressurised fluid jack or the like, which displaces it between the raised position and the lowered position, and a pair of lateral bell-crank levers 78 articulated to the support 76 about two transverse pins 80 parallel to the direction of advance of the film 58. The lower arms of the two levers 78, indicated 82, face each other and have take-up projections 84 on their respective rear faces, the projections being parallel to the pins 80 are interrupted by notches 86 located like the retaining teeth 34 of the frames 12 (or 14). The other arms of the two levers 78, indicated 88, are movable within recesses 90 of the body 76 so as to allow the angular movement of the arms 82 between a lowered position corresponding to the raised position of the bending member 74, in which the two arms 82 extend substantially horizontally and the distance between the respective take-up projections 84 is greater than the width of the film 58, and a raised position corresponding to the lowered position to the bending member 74, in which these arms 82 are inclined upwardly and bear against the bottom of the body 76. In this position, the two arms 82 define an arcuate niche with its concavity facing downwardly (Figure 10), and the distance between the take-up projections 84 is less than the width of the film 58. The movement of the arms 82 from the raised position to the lowered position is achieved simply by gravity following the raising of the bending member 74 from the lowered position to the raised position, while the raising of the arms 82 from the lowered position is achieved simply as a result of the bearing of the levers 78 on the film 58.

The device described above functions as follows:

The frames 12 (or 14) coming from the loader 52 are fed successively to the cutting and mounting station 54 where each of them receives a respective transparency 16 which is cut from the film 58 by the knife 64.

As is seen from Figures 6 and 9, each frame 12 is located beneath the end of the strip of film 58 and moves the preceding frame 12 on which a transparency 16 has already been placed towards the transfer device 60. Immediately the frame 12 is stopped in the correct position in correspondence with the station 54, the cutting blade 64 is lowered towards the counter-blade 66 to cut the transparency 16, while almost simultaneously, or with a slight delay, the bending member 74 is lowered. By virtue of the particular profile of the cutting edge of the blade 64, the sides of the film 58 are cut initially by the parts 70 of the cutting edge and the central zone is cut subsequently and progressively by the part 72 of the blade 68. This cutting action, as well as ensuring correct alignment of the transparency 16 during and after its removal from the film 58, causes a slight bending of the transparency 16 and eases the action of the bending member 74. In effect, when the cutting action of the blade 64 is completed, the bending member 74 is already in the lowered position (Figure 10) with the two arms 82 of the pivoted levers 78 raised and the edges 16a of the transparency 16 engaged by the take-up projections 84. The transparency 16 thus assumes the bowed configuration illustrated in Figure 10 with a concavity obviously facing the frame 12. During this phase, the retaining teeth 34 of the frame 12 are aligned with the take-up members 84 and fit into the notches 86 in the arms 82.

At this point, the blade 64 is raised and subsequently the bending member 74 is raised so that the two pivoted levers 78 rotate to bring the arms 82 into the lowered position. The edges 16a of the transparency 16 are then freed from the take-up projections 84 and, as a result of the resilient return of the transparency to its undeformed flat condition, they engage beneath the retaining teeth 34 against the inclined surfaces 38 thereof (Figures 4 and 11).

After this, the next frame 12 is fed to the station 54 whereby the frame 12 carrying the transparency 16 is pushed towards the transfer device 60 and from there to the zone of fitting of the other frame for completion of the mount 10.

It will be clear from the above that the device according to the invention allows the mounting operations to be carried out rapidly and efficiently ensuring the correct positioning and centering of the transparency without the use of glue and thus eliminating the risk of streaking and soiling of the transparency itself.

Naturally, the principle of the invention remaining the same, the constructional details and the embodiments of the mount and the mounting apparatus may be varied widely with respect to that described and illustrated, without thereby departing from the scope of the present invention.

Thus, for example, it is not necessary for both the frames 12, 14 of the mount 10 to be provided with retaining teeth 34, since it would suffice to provide these teeth only on that frame intended to receive the transparency 16 initially. However, it is particularly advantageous to shape the two frames 12, 14 identically, in that it allows them to be manufactured by moulding from plastics material with the use of a single common mould.

## Claims

1. Slide mount (10) comprising a pair of coupled quadrilateral frames (12, 14) having peripheral support surfaces (24) on their inner faces for a transparency (16) inserted in the mount (10), wherein at least one of the frames (12, 14) has retaining tooth members (34) under which two opposite edges (16a) of the transparency (16) are anchored to the support surface (24) of this frame (12, 14), said retaining teeth (34) being located in two series parallel to two opposite sides of the frame (12, 14), and the retaining teeth (34) of each series having active surfaces (38) inclined towards the teeth (34) of the other series and against which the opposite edges (16a) of the transparency (16) bear, characterised in that, between the two series of retaining teeth (34) and the corresponding zones of the peripheral support surface (24) of the frame (12, 14), there are formed two recessed slopes (28) facing the inclined active surfaces (38) of the retaining teeth (34) and inclined downwardly towards these retaining teeth (34).

2. Mount according to claim 1, characterised in that both the frames (12, 14) have respective series of retaining teeth (34), in that the retaining teeth (34) of each series are staggered relative to those of the other series, and in that beside each retaining tooth (34) of each frame (12, 14) there is a recess for receiving a corresponding retaining tooth (34) of the other frame (14, 12) in the assembled condition of the mount.

3. Mount according to claim 1 or 2, characterised in that the or each frame has positioning and centering stops (40) which cooperate with the other two edges (16c) of the transparency (16).

4. Mount according to any one of the preceding claims, characterised in that the two frames (12, 14) are coupled together by snap-engagement of male and female peripheral connecting members (20, 22).

5. Mount according to any one of the preceding claims, characterised in that the frames (12, 14) are of moulded plastics material.

6. Apparatus for assembling a slide comprising a transparency (16) inserted in a mount (10) according to any one of the preceding claims, comprising a film cutting and mounting station (54), means (56) for feeding a strip of film (58) to the cutting and mounting station, means (50) for the individual feeding of the frames (12, 14) of each mount (10) having the retaining teeth (34) to the cutting and mounting station in synchronism with the film feed means (56), cutting means (64) movable at the cutting and mounting station in synchronism with the film feed means for cutting successive transparencies onto the peripheral support surface (24) of the frames (12, 14) supplied successively to the supply and mounting station (54), and supply and coupling means (62) for the other frames (12, 14) of the mount (10) located at the outlet of the cutting and mounting station, characterised in that the cutting and mounting station (54) includes a bending member (74) operable in synchronism with the movement of the cutting means (64) to take-up and bring together the two opposite edges (16a) of each transparency (16) by bending the transparency (16), and subsequently to release said edges (16a) of the transparency (16) so that they engage beneath the retaining teeth (34) of the frame (12, 14).

7. Apparatus according to Claim 6, characterised in that the bending member (74) comprises a support (76) carrying two opposing pivoted arms (82) having rear take-up projections (84) arranged to engage the two edges (16a) of the transparency (16).

8. Apparatus according to Claim 7, characterised in that the two pivoted arms (82) are freely articulated beneath the support (76) and are normally kept by gravity in a lowered rest position in which the distance between the respective take-up projections (84) is greater than the width of the transparency (16), the two arms (82) being able to rotate upwardly, so as to bring the respective take-up projections (84) closer together to a distance less than the width of the transparency (16), and as a result of the bearing of these two arms (84) on the transparency (16), the transparency is fitted in the frame (12, 14).

9. Apparatus according to Claim 8, characterised in that the take-up projections (84) of the two pivoted arms (82) are interrupted by notches (86) arranged like the retaining teeth (34) of the frames (12, 14).

10. Apparatus according to any one of Claims 6 to 9, characterised in that the cutting means include a cutting blade (64) the cutting edge of which has a central portion (72) that is re-entrant relative to its ends (70).

11. Apparatus according to Claim 10, characterised in that the re-entrant portion (72) is arcuate.

12. Method for fitting a transparency (16) into a slide mount (10) according to any one of Claims 1 to 5, characterised in that it comprises the steps of cutting a transparency (16) of a predetermined length, positioning the transparency (16) on the peripheral support surface (24) of one of the frames having the retaining teeth (34) prior to the coupling of the frames (12, 14), bringing the two opposite edges (16a) of the transparency together by bending the transparency (16) so that its concavity faces the frame (12, 14), and releasing the edges of the transparency (16) to effect, by resilient return of the transparency (16) to its undeformed flat condition, the engagement of said edges (16a) of the transparency (16) beneath the retaining teeth (34) of the frame (12, 14).

13. Method according to Claim 12, characterised in that the step of cutting the transparency (16) is effected by cutting first the lateral zones of a film adjacent said two edges (16a) and subsequently by cutting the central part of the film between these lateral zones.

**Patentansprüche**

1. Diarähmchen (10), enthaltend ein Paar miteinander verbundener quadratischer Rahmen (12, 14), die umlaufende Auflageflächen (24) an ihren Innenseiten für ein in das Rähmchen (10) eingesetztes Dia (16) aufweisen, wobei wenigstens einer der Rahmen (12, 14) Haltezähne (34) aufweist, unter denen zwei gegenüberliegende Ränder (16a) des Dias (16) an der Auflagefläche (24) dieses Rahmens (12, 14) verankert werden, wobei diese Haltezähne (34) in zwei Serien parallel zu zwei gegenüberliegenden Seiten des Rahmens (12, 14) angeordnet sind und die Haltezähne (34) einer jeden Serie aktive Flächen (38) aufweisen, die gegen die Zähne (34) der anderen Serie geneigt sind und gegen die die gegenüberliegenden Ränder (16a) des Dias (16) anliegen, dadurch gekennzeichnet, daß zwischen den zwei Serien von Haltezähnen (34) und den entsprechenden Bereichen der umlaufenden Haltefläche (24) des Rahmens (12, 14) zwei vertiefte Abschrägungen (28) ausgebildet sind, die den geneigten aktiven Flächen (38) der Haltezähne (34) gegenüberstehen nach unten gegen diese Haltezähne (34) geneigt sind.

2. Diarähmchen nach Anspruch 1, dadurch gekennzeichnet, daß die beiden Rahmen (12, 14) jeweils Serien von Haltezähnen (34) aufweisen, daß die Haltezähne (34) einer jeden Serie gegenüber jenen der anderen Serie versetzt angeordnet sind und daß neben jedem Haltezahn (34) eines jeden Rahmens (12, 14) eine Vertiefung zur Aufnahme eines entsprechenden Haltezahnes (34) des anderen Rahmens (14, 12) im zusammengesetzten Zustand des Diarähmchens ausgebildet ist.

3. Diarähmchen nach Anspruch 1 oder 2, dadurch gekennzeichnet, daß der oder jeder Rahmen Positionierungs- und Zentrierungsanschläge (40) aufweist, die mit den anderen zwei Rändern (16c) des Dias (16) zusammenwirken.

4. Diarähmchen nach einem der vorhergehenden Ansprüche, dadurch gekennzeichnet, daß die zwei Rahmen (12, 14) miteinander durch schnappenden Eingriff von Stecker- und Buchsen-Randverbindungselementen (20, 22) verbunden sind.

5. Diarähmchen nach einem der vorhergehenden Ansprüche, dadurch gekennzeichnet, daß die Rahmen (12, 14) aus einem gespritzten Plastikmaterial bestehen.

6. Vorrichtung zum Zusammensetzen eines projektionsfertigen Dias aus einem Dia (16), das in einem Rähmchen (10) nach einem der vorhergehenden Ansprüche montiert ist, enthaltend eine Filmschneide- und Montagestation (54), eine Einrichtung (56) zum Zuführen eines Filmstreifens (58) zu der Schneide- und Montagestation, eine Einrichtung (50) zum einzelnen Zuführen der Rahmen (12, 14) eines jeden Rähmchens (10), die Haltezähne (34) aufweisen, zu der Schneide- und Montagestation synchron mit der Filmzuführeinrichtung (56), eine Schneideinrichtung (64), die an der Schneide- und Montagestation synchron mit der Filmzuführeinrichtung beweglich ist, um aufeinanderfolgende Dias auf die Randauflagefläche (24) der Rahmen (12, 14) abzuschneiden, die nacheinander der Zuführ- und Montagestation (54) zugeführt werden, und eine Zuführ- und Verbindungseinrichtung (62) für die anderen Rahmen (12, 14) des Rähmchens (10) am Auslaß der Schneide- und Montagestation, dadurch gekennzeichnet, daß die Schneide- und Montagestation (54) eine Biegeeinrichtung (74) enthält, die synchron mit der Bewegung der Schneideinrichtung (64) wirksam ist, um die zwei gegenüberliegenden Ränder (16a) eines jeden Dias (16) durch Biegen des Dias (16) aufzunehmen und zusammenzubringen und anschließend diese Ränder (16a) des Dias (16) loszulassen, so daß sie unter die Haltezähne (34) des Rahmens (12, 14) gelangen.

7. Vorrichtung nach Anspruch 6, dadurch gekennzeichnet, daß die Biegeeinrichtung (74) einen Halter (76) aufweist, der zwei gegenüberliegende, schwenkbare Arme (82) trägt, die rückwärtige Aufnahmevorsprünge (84) aufweisen, die dazu eingerichtet sind, die zwei Ränder (16a) des Dias (16) zu ergreifen.

8. Vorrichtung nach Anspruch 7, dadurch gekennzeichnet, daß die zwei schwenkbaren Arme (82) frei an dem Träger (76) angelenkt sind und normalerweise durch Schwerkraft in einer abgesenkten Ruhestellung gehalten werden, in der der Abstand zwischen den entsprechenden Aufnahmevorsprüngen (84) größer als die Breite des Dias (16) ist, wobei die zwei Arme (82) nach oben schwenken können, um die entsprechenden Aufnahmevorsprünge (84) dichter auf eine Distanz zusammenzubringen, die kleiner als die Breite des Dias (16) ist und als Ergebnis der Anlage dieser zwei Arme (84) an dem Dia (16) das Dia in den Rahmen (12, 14) eingesetzt wird.

9. Vorrichtung nach Anspruch 8, dadurch gekennzeichnet, daß die Aufnahmevorsprünge (84) der zwei schwenkbaren Arme (82) durch Rillen (86) unterbrochen sind, die wie die Haltezähne (34) der Rahmen (12, 14) eingerichtet sind.

10. Vorrichtung nach einem der Ansprüche 6 bis 9, dadurch gekennzeichnet, daß die Schneideinrichtung ein Schneidmesser (64) enthält, dessen Schneidkante einen mittleren Abschnitt (72) hat, der gegenüber ihren Enden (70) zurückgesetzt ist.

11. Vorrichtung nach Anspruch 10, dadurch gekennzeichnet, daß der zurückgesetzte Abschnitt (72) bogenförmig ist.

12. Verfahren zum Befestigen eines Dias (16) in einem Diarähmchen (10) nach einem der Ansprüche 1 bis 5, dadurch gekennzeichnet, daß es die folgenden Schritte umfaßt:

Abschneiden eines Dias (16) einer vorbestimmten Länge, Auflegen des Dias (16) auf die umlaufende Auflagefläche (24) eines der mit Haltezähnen (34) versehenen Rahmen vor dem Zusammenfügen der Rahmen (12, 14), Gegeneinanderbewegen der zwei gegenüberliegenden Ränder (16a) des Dias durch Biegen des Dias (16) derart, daß seine konkanve Seite dem Rahmen (12, 14) gegenübersteht, und Lösen der Ränder des Dias (16), um durch elastische Rückstellung des Dias (16) in seinen unverformten flachen Zustand die Anlage der genannten Ränder (16a) des Dias (16) unter die Haltezähne (34) des Rahmens (12, 14) zu bewirken.

13. Verfahren nach Anspruch 12, dadurch gekennzeichnet, daß der Schritt des Abschneidens des Dias (16) durch Schneiden zuerst der seitlichen Bereiche eines Filmes benachbart den zwei Rändern (16a) und anschließendes Schneiden des mittleren Teils des Films zwischen diesen seitlichen Bereichen ausgeführt wird.

## Revendications

1. Cadre (10) de diapositive comprenant une paire de châssis rectangulaires (12, 14) munis, sur leurs faces internes, de surfaces périphériques de support (24) pour une diapositive (16) insérée dans le cadre (10), au moins l'un des châssis (12, 14) possédant des organes dentés de retenue (34) sous lesquels deux bords opposés (16a) de la diapositive (16) sont ancrés à la surface de support (24) de ce châssis (12, 14), lesdites dents de retenue (34) étant agencées en deux séries parallèles à deux côtés opposés du châssis (12, 14), et les dents de retenue (34) de chaque série présentant des faces efficaces (38) inclinées vers les dents (34) de l'autre série, et contre lesquelles reposent les bords opposés (16a) de la dispositive (16), cadre caractérisé par le fait que deux rampes évidées (28), tournées vers les faces efficaces inclinées (38) des dents de retenue (34) et inclinées vers le bas en direction de ces dents de retenue (34), sont ménagées entre les deux séries de dents de retenue (34) et les zones correspondantes de la surface périphérique de support (24) du châssis (12, 14).

2. Cadre selon la revendication 1, caractérisé par le fait que les châssis (12, 14) comportent l'un et l'autre des séries respectives de dents de retenue (34); par le fait que les dents de retenue (34) de chaque série sont en quinconce par rapport à celles de l'autre série; et par le fait qu'un évidement se trouve à côté de chaque dent de retenue (34) de chaque châssis (12, 14), afin de recevoir une dent de retenue correspondante (34) de l'autre châssis (14, 12) en condition assemblée du cadre.

3. Cadre selon la revendication 1 ou 2, caractérisé par le fait que le ou chaque châssis présente des butées (40) de positionnement et de centrage, qui coopérent avec les deux autres bords (16c) de la diapositive (16).

4. Cadre selon l'une quelconque des revendications précédentes, caractérisé par le fait que les deux châssis (12, 14) sont solidarisés par emboîtement par déclic de pièces périphériques de liaison (20, 22), de types mâle et femelle.

5. Cadre selon l'une quelconque des revendications précédentes, caractérisé par le fait que les châssis (12, 14) sont venus de moulage en matière plastique.

6. Dispositif pour assembler une diapositive enchâssée comprenant une diapositive (16) insérée dans un cadre (10) selon l'une quelconque des revendications précédentes, comprenant un poste (54) de sectionnement et de montage d'un film; au moyen (56) pour délivrer un ruban du film (58) au poste de sectionnement et de montage; un moyen (50) pour délivrer individuellement au poste de sectionnement et de montage, en synchronisme avec le moyen (56) de délivrance du film, les châssis (12, 14) de chaque cadre (10) présentant les dents de retenue (34); un moyen sectionneur (64) mobile dans le poste de sectionnement et de montage, en synchronisme avec le moyen de délivrance du film, pour sectionner des diapositives successives sur la surface périphérique de support (24) des châssis (12, 14) délivrés successivement au poste (54) d'alimentation et de montage; ainsi qu'un moyen (62) d'alimentation et d'accouplement des autres châssis (12, 14) du cadre (10) situé à la sortie du poste de sectionnement et de montage, dispositif caractérisé par le fait que le poste (54) de sectionnement et de montage présente un élément de flexion (74) actionnable, en synchronisme avec le mouvement du moyen sectionneur (64), pour prélever et regrouper les deux bords opposés (16a) de chaque diapositive (16) en imposant une flexion à cette diapositive (16), et pour relâcher ensuite lesdits bords (16a) de la diapositive (16), de façon qu'ils s'engagent au-dessous des dents de retenue (34) du châssis (12, 14).

7. Dispositif selon la revendication 6, caractérisé par le fait que l'élément de flexion (74) présente un support (76), portant deux bras (82) à pivotements opposés qui possèdent des saillies postérieures de préhension (84) conçues pour venir en prise avec les deux bords (16a) de la diapositive (16).

8. Dispositif selon la revendication 7, caractérisé par le fait que les deux bras pivotants (82) sont articulés librement au-dessous du support (76) et sont normalement maintenus, par gravité, dans une position basse de repos dans laquelle la distance entre les saillies respectives de préhension (84) est plus grande que la largeur de la diapositive (16), les deux bras (82) pouvant accomplir une rotation vers le haut de façon à rapprocher les saillies respectives de préhension (84) jusqu'à une distance moindre que la largeur de la diapositive (16), cette diapositive étant ajustée dans le châssis (12, 14) par suite de l'appui de ces deux bras (84) sur la diapositive (16).

9. Dispositif selon la revendication 8, caractérisé par le fait que les saillies de préhension (84) des deux bras pivotants (82) sont interrompues par des entailles (86) présentant le même agencement que les dents de retenue (34) des châssis (12, 14).

10. Dispositif selon l'une quelconque des revendications 6 à 9, caractérisé par le fait que le moyen sectionneur consiste en une lame de coupe (64), dont l'arête tranchante présente une région centrale (72) qui est incurvée par rapport à ses extrémités (70).

11. Dispositif selon la revendication 10, caractérisé par le fait que la région incurvée (72) est curviligne.

12. Procédé pour insérer une diapositive (16) dans un cadre (10) selon l'une quelconque des revendications 1 à 5, procédé caractérisé par le fait qu'il comprend les étapes consistant à sectionner une diapositive (16) d'une longueur prédéterminée; positionner la diapositive (16) sur la surface périphérique de support (24) de l'un des châssis présentant les dents de retenue (34), préalablement à l'accouplement des châssis (12, 14); regrouper les deux bords opposés (16a) de la diapositive, en imposant à cette diapositive (16) une flexion telle que sa concavité soit tournée vers le châssis (12, 14); et relâcher les bords de la diapositive (16) afin de provoquer, par retour élastique de cette diapositive (16) à sa condition aplatie non déformée, l'engagement desdits bords (16a) de la diapositive (16) au-dessous des dents de retenue (34) du châssis (12, 14).

13. Procédé selon la revendication 12, caractérisé par le fait que l'étape de sectionnement de la diapositive (16) est exécutée en sectionnant tout d'abord les zones latérales d'un film au voisinage immédiat des deux bords précités (16a), puis en sectionnant la partie centrale du film entre ces zones latérales.

FIG. 1

FIG. 2

FIG. 3

FIG. 4

FIG. 7

0 109 938

FIG. 5

FIG. 6

FIG. 8

2

FIG. 9

FIG. 10

FIG. 11